(19) **Europäisches Patentamt**
**European Patent Office**
**Office européen des brevets**

(11) **EP 1 306 979 A1**

(12) **EUROPEAN PATENT APPLICATION**

(43) Date of publication:
**02.05.2003 Bulletin 2003/18**

(51) Int Cl.7: **H04B 1/707**, H04B 7/26

(21) Application number: **01125320.0**

(22) Date of filing: **26.10.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicants:
• **STMicroelectronics N.V.**
  **1077 XX Amsterdam (NL)**
• **STMicroelectronics S.r.l.**
  **20041 Agrate Brianza (Milano) (IT)**

(72) Inventors:
• **Messina, Ettore**
  **01170 Crozet (FR)**
• **Sapienza, Marzia**
  **95030 S.A. Li Battiati (Catanie) (IT)**
• **Berens, Friedbert**
  **1202 Genève (CH)**

(74) Representative: **Casalonga, Axel et al**
  **BUREAU D.A. CASALONGA - JOSSE**
  **Paul-Heyse-Strasse 33**
  **80336 München (DE)**

(54) **Method and device for slot synchronisation of a user equipment to a cell in a cell search procedure of a mobile communication system**

(57)    The device of slot synchronisation comprises reception means (BE) for receiving a synchronisation signal containing a synchronisation code ; a local memory (LM) containing a copy of the synchronisation code ; correlation means (CMF) for performing a correlation process of the received signal with said copy of the synchronisation code, for successively delivering groups of at the most N indexed samples respectively affected with N correlation values ; selection means (SEL) for selecting among said N samples of the first group a subgroup of N1 indexed samples according to a predetermined selection criteria ; accumulation means (AD) for accumulating over G groups, energy values corresponding to the correlation values of the N1 selected indexed samples, in order to obtain N1 accumulated energy values ; detection means (DM) for acquiring the slot timing by detecting one or more maxima among the N1 accumulated energy values.

FIG.3

EP 1 306 979 A1

**Description**

The invention relates in general to the field of wireless communication systems, and more particularly to the CDMA systems.

In a wireless communication system, a central base station communicates with a plurality of remote terminals, such as cellular mobile phones or other wireless devices for data reception and transmission. Frequency-Division Multiple Access (FDMA) and Time-Division Multiple Access (TDMA) are the traditional multiple access schemes to provide simultaneous services to a number of terminals. The basic idea behind FDMA and TDMA technics is to slice the available resource into multiple frequency or time slots, respectively, so that multiple terminals can be accommodated without causing interference.

Contrasting these schemes with separate signals in frequency or time domains, Code-Division Multiple Access (CDMA) allows multiple users to share a common frequency and time channel by using coded modulation.

More precisely, as it is well-known by the man skilled in the art, a scrambling code which is a long pseudo noise code sequence, is associated with each base station and permits to distinguish the base stations from each other. Further, one or more orthogonal codes, known by the man skilled in the art under the denomination of OVSF codes, are allocated to each remote terminal (such as cellular mobile phone or other wireless device). All these OVSF codes are orthogonal with each other, which permits to distinguish a remote terminal from another.

Before emitting a signal on the transmission channel towards a remote terminal, the signal is scrambled and spread by the base station using the scrambling code of the base station itself and the OVSF codes assigned to the remote terminal.

Each base station radiates within a cell and communicates with all terminals located within this cell.

The invention relates more precisely to the slot synchronisation of a user equipment, such as a cellular mobile phone or other wireless device, to a cell in a cell search procedure of a mobile communication system, in particular a system which operates according to the UTRA standard which is a mode based on a CDMA technology.

During the cell search procedure, the user equipment searches for a cell and determines the downlink scrambling code and frame synchronisation of that cell.

The cell search procedure is typically carried out in three phases.

During the first phase, which is also called "slot synchronisation" by the man skilled in the art, the user equipment uses a synchronisation code, for example the primary synchronisation code of the synchronisation channel SCH in a UTRA standard, to acquire slot synchronisation to a cell.

During the second phase of the cell search procedure, also called "frame synchronisation and code-group identification", the user equipment uses the secondary synchronisation code of the synchronisation channel to find frame synchronisation and identify the code group of the cell found in the first phase.

During the third and last phase of the cell search procedure, which is the scrambling-code identification, the user equipment determines the exact primary scrambling code used by the found cell. After the primary scrambling code has been identified, the primary common control physical channel (CCPCH) can be detected, superframe synchronisation can be acquired and the system and cell specific broadcast channel (BCH) information can be read.

The first phase of the cell search procedure, i.e. the slot synchronisation, is typically done with a complex (i. e. operating in parallel on the in-phase and in-quadrature signal components) matched filter (or any similar device) matched to the primary synchronisation code which is common to all cells. The slot timing of the cell can be obtained by detecting energy peaks at the matched filter output.

In the UTRA standard, the synchronisation channel is not scrambled at all and uses a 256 chip long code per slot. The matched filter normally works as a poly-phase filter at two time the chip rate, leading to 5120 output samples per slot.

In the existing implementations, the energy values corresponding to the values of the cross correlation function between the received signal and the primary synchronisation code, are stored in a memory and averaging is performed over a certain number of slots adding up all positions. The needed memory size is 5120 words. Furthermore, 5120 additions and 5120 energy calculations are needed per slot in order to implement the averaging unit. At the end of the averaging period, the maximum has to be determined among the 5120 accumulated energy values.

The present invention allows a dramatic reduction of the memory usage with a minimum and predictable performance loss.

Further, another aim of the invention is to strongly reduce the total number of operations, and hence the power consumption.

The invention proposes a method for slot synchronisation of a user equipment to a cell in a cell search procedure of a mobile communication system. According to a general feature of the invention, the method comprises

- a step of receiving a synchronisation signal containing a synchronisation code,
- a correlation step for performing a correlation process of the received signal with a copy of the synchronisation code stored in the user equipment, for successively delivering groups of at the most N indexed samples respectively affected with N correlation values (N = 5120 for example),
- a selection step for selecting among said N samples of the first group a sub-group of N1 indexed samples according to a predetermined selection criteria (N1 = 128 for example),
- an accumulation step for accumulating over G groups (G = 15 for example), energy values corresponding to the correlation values of the N1 selected indexed samples, in order to obtain N1 accumulated energy values,
- a step of acquiring the slot timing by detecting one or more maxima among the N1 accumulated energy values.

In other word, the basic principle of the invention is that a certain number of "best candidates" is selected among the first group of N indexed samples and only their energy values, together with their relative indexes, are stored for further accumulation.

Generally speaking it is only necessary to detect the maximum of the accumulated energy value to acquire the slot timing. However the detection of several maxima, i.e. several highest values, can permit to increase the overall performance of the acquisition process allowing for the simultaneous detection of several multi-path components or several base stations.

According to a preferred embodiment of the invention, the selection criteria is a ranking criteria based on the highest energy values.

More precisely, according to such an embodiment, the selection step comprises

- calculating the energy values of the N samples of the first group, and
- selecting the N1 indexed samples having the N1 highest energy values.

It had been observed that it was possible to acquire the slot timing even if the value N1 is very lower than the value N. However, choosing N1 such that 0,0125.N < N1 < 0,05.N is a good compromise between a significant reduction of the memory size and a minimum performance loss. For example, if N is equal to 5120, N1 can be chosen such that 64 < N1 < 256.

The invention proposes also a device for slot synchronisation of a user equipment to a cell in a cell search procedure of a mobile communication system.

According to a general feature of the invention, the device comprises

- reception means for receiving a synchronisation signal containing a synchronisation code,
- a local memory containing a copy of the synchronisation code
- correlation means for performing a correlation process of the received signal with said copy of the synchronisation code, for successively delivering groups of at the most N indexed samples respectively affected with N correlation values,
- selection means for selecting among said N samples of the first group a sub-group of N1 indexed samples according to a predetermined selection criteria,
- accumulation means for accumulating over G groups, energy values corresponding to the correlation values of the N1 selected indexed samples in order to obtain N1 accumulated energy values,
- detection means for acquiring the slot timing by detecting one or more maxima among the N1 accumulated energy values.

According to an embodiment of the invention, the selection means comprises calculation means for calculating the energy values of the N samples of the first group, and the selection criteria is a ranking criteria based on the highest energy values.

According to an embodiment of the invention, the selection means comprises an energy memory for storing the N1 energy values of the selected N1 samples, and an index memory for storing the indexes of the selected N1 samples, and the accumulation means comprises comparison means for comparing the current index of a sample of a group with the indexes stored in the index memory, and adding means for accumulating in said energy memory, over said G group, the energy values of the selected N1 samples.

It is particularly advantageous that the device further comprises control means for enabling or disabling the calculation means and the correlation means depending on the result of the comparison made by the comparison means.

In other words, the correlation means and the calculation means are preferably activated only for the selected candidates, which permits a strongly reduction of the total number of operations and hence of the power consumption.

The invention proposes also an user equipment, for example a cellular mobile phone, of a mobile communication system, comprising a slot synchronisation device as defined above.

Other advantages and features of the invention will appear on examining the detailed description of embodiments, these being in no way limiting and of the appended drawings in which :

Figure 1 illustrates very diagrammatically a cellular mobile phone according to the invention incorporating a device according to the invention,

Figure 2 illustrates a structure of a synchronisation channel,

Figure 3 illustrates more in details but still very diagrammatically the main means of a slot synchronisation device according to the invention, and,

Figure 4 illustrates still diagrammatically a flow chart embodying a method according to the invention.

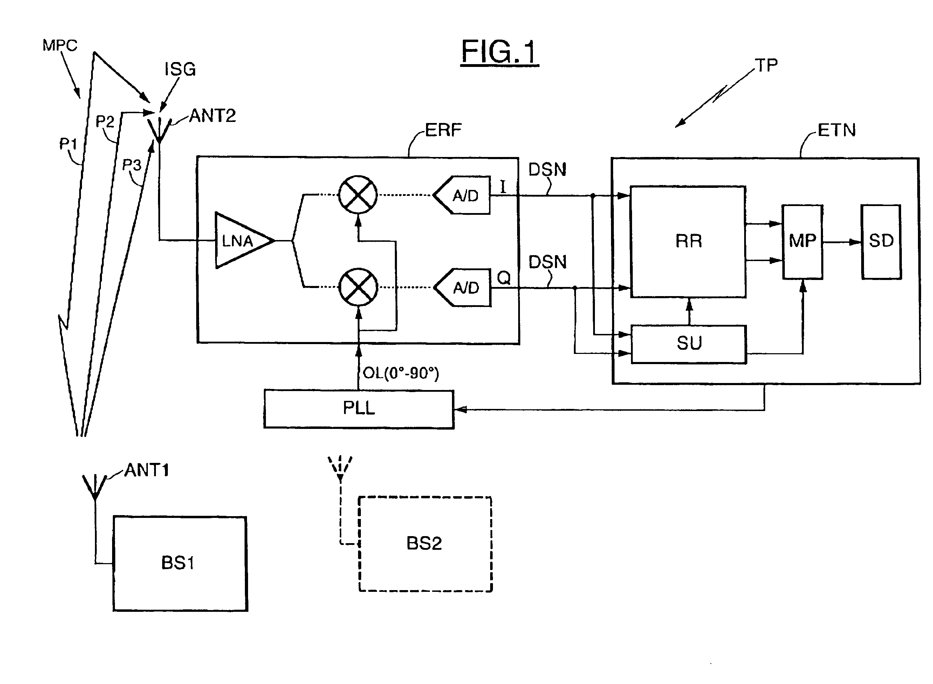

In Figure 1, the reference TP denotes a remote terminal such as a cellular mobile phone which is in communication with a base station BS1. The mobile phone TP comprises, conventionally, an analog radio frequency front-end stage ERF connected to an antenna ANT2 for receiving an input signal ISG.

Conventionally, the stage ERF comprises a low noise amplifier LNA and two processing channels including mixers and conventional filters and amplifiers (not shown). The two mixers receive respectively from a phase locked loop PLL two signals, having mutually a phase difference of 90°. After frequency transposition in the mixers, the two processing channels define respectively two streams I and Q as it is well known by the man skilled in the art. After digital conversion into analog-to-digital converters A/D, the two digital streams I and Q are delivered to a digital processing stage ETN.

This digital stage ETN comprises a Rake receiver RR (or another functionally equivalent de-spreading and demodulation mean). The Rake receiver is adapted for time aligning, de-scrambling, de-spreading, and combining the delayed versions of the initial signals, in order to deliver the data stream contained in the initial signals.

The Rake receiver is followed by a conventional channel decoding means MP which perform the decoding of the constellation symbols delivered by the Rake receiver. The stage ETN comprises also conventionally a source decoder SD which performs a source decoding well-known by the man skilled in the art.

At last, as it is also well-known by the man skilled in the art, the phase locked loop PLL is controlled by an automatic frequency control algorithm incorporated in a processor of the stage ETN.

The received signal ISG results from the transmission of an initial signal by the antenna ANT1 of the base station BS1 on a multi path channel transmission MPC. In the present embodiment, it is assumed that the mobile phone TP receives a signal from base station BS1 only. But of course, the received signal ISG could also result from the transmission of initial signals respectively emitted by several different base stations BS1 and BS2.

Because of possible reflections of the signal on obstacles located between the base station BS1 and the mobile phone TP, the transmission channel MPC comprises several different transmission paths (here three paths P1, P2, P3 are shown).

As it is well known by the man skilled in the art, before transmission through the antenna ANT1, the initial signal containing the data (symbols) is scrambled and spread by the processing means of the base station BS1, by using the scrambling code of the base station and the orthogonal code (OVSF code) of the phone TP. Consequently, the symbols are transformed into chips having a predetermined length Tc (for example equal to 260 ns), corresponding to a predetermined chip rate (of 3.84 Mcps for example). The chip rate is greater than the data or symbol rate. For example, one symbol can be transformed into 4 to 256 chips.

The initial signal constituted of chips is then filtered in a matched filter before analog conversion and transmission through antenna ANT1.

After analog-to-digital conversion in the AID converters of the phone TP, the signal (complex signal constituted of the two streams I and Q) is a digital scrambled and spread signal constituted of chips, over sampled with an over sampling factor Ns (Ns = 4 for example). This digital signal DSN includes delayed versions of the initial scrambled and spread signal transmitted by the base station.

However, in particular because de Rake receiver needs to know the scrambling code used by the cell, the digital stage ETN further comprises a synchronisation unit SU which receives also the digital signal DSN. This synchronisation unit will perform the cell search procedure and in particular the first phase thereof i.e. the slot synchronisation.

We assume now in this example that the standard used by the communication system is the UTRA standard well known by the man skilled in the art.

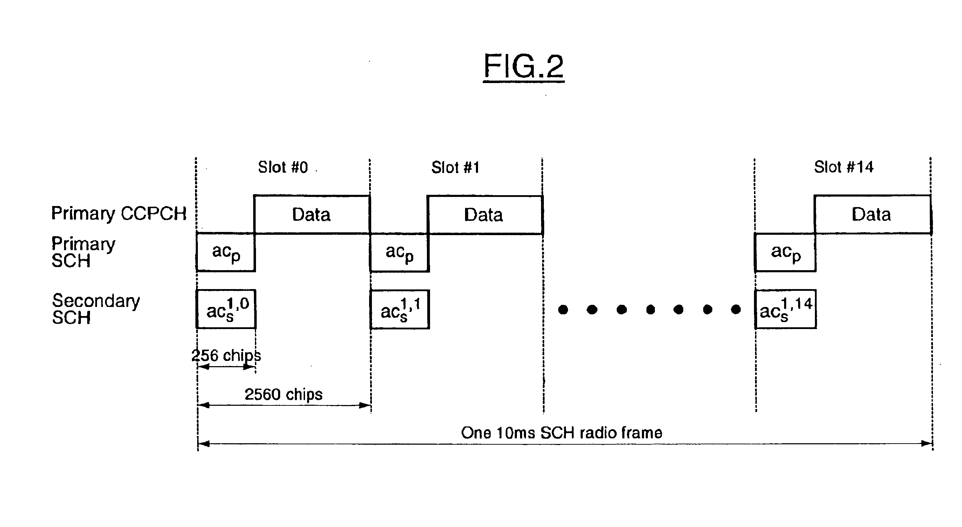

In such a standard, the synchronisation Channel (SCH) is a downlink signal used for cell search. The SCH consists of two sub channels, the Primary and Secondary SCH. The 10 ms radio frames of the Primary and Secondary SCH are divided into 15 slots, each of length 2560 chips, Figure 2 illustrates the structure of the SCH radio frame.

The Primary SCH consists of a modulated code of length 256 chips, the Primary Synchronisation Code (PCS) denoted $C_p$ in figure 2, transmitted once every slot. The PCS is the same for every cell in the system.

The Secondary SCH consists of repeatedly transmitting a length 15 sequence of modulated codes of length 256 chips, the Secondary Synchronisation Codes (SSC), transmitted in parallel with the Primary SCH. The SSC is denoted c, [i.k] in figure 18, where $i$ = 0,1, ..., 63 is the number of the scrambling code group, and $k$ = 0,1, ..., 14 is the slot number. Each SSC is chosen from a set of 16 different codes of length 256. This sequence on the Secondary SCH indicates which of the code groups the cell's downlink scrambling code belongs to.

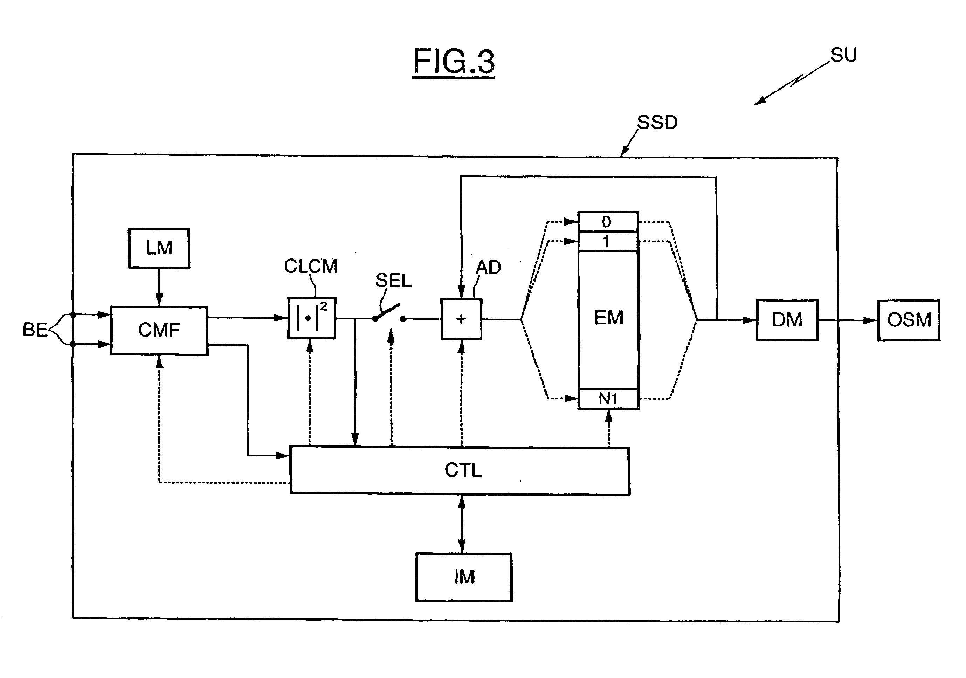

During the slot synchronisation of the user equipment to the specific base station, the user equipment needs first to detect the primary synchronisation code Cp. For this operation, the slot synchronisation device SSD of the synchronisation unit SU (figure 3) uses correlation means CMF connected to the reception means BE of the synchronisation unit, for performing a correlation process of the received synchronisation signal containing the synchronisation code with a copy of the synchronisation code contained in a local memory LM. The correlation means are for example a code matched filter CMF which is matched to Cp.

The matched filter normally works as a poly-phase filter at two times the chip rate, leading to 5120 output samples per slot. This output samples represent the values of the cross correlation function between the received signal and the code word Cp (formula I) :

$$R_{RxCp}(n) = \sum_{K=0}^{255} C_p(k).Rx(2.k+n) \; ; \; n = 0...5119 \quad (I)$$

Further to this correlation means, the device SSD comprises calculation means (square module) CLCM for calculating energy values from the correlation values given by the formula (I).

The slot synchronisation device SSD further comprising selection means SEL, very diagrammatically illustrated on figure 3 by a switch. As it will be explained in details therebelow, the selection means selects among the N samples (N = 5120) of the first group of samples (corresponding to a first slot of the synchronisation channel) delivered by the correlation means CMF, a sub-group of N1 indexed samples according to a predetermined selection criteria.

The device SSD further comprise accumulation means for accumulating over G successive groups (G = 15 for example) energy values of the N1 selected indexed samples in order to obtain N1 accumulated energy values which are stored in an energy memory EM.

On figure 3, the accumulation means is diagrammatically illustrates by an adder AD.

All these means are controlled by control means CTL which cooperates with an index memory IM which store the indexes of the N1 selected samples.

At last, detection means DM are adapted to acquire the slot timing by detecting one or more maxima among the N1 accumulated energy values. The index of the energy peak is then delivered to the other mean OSM of the synchronisation units which are adapted to perform the second and third phases of the cell search procedure.

The calculation means, selection means, accumulation means and control means are realized by specific hardware blocks and/or software running within a microprocessor.

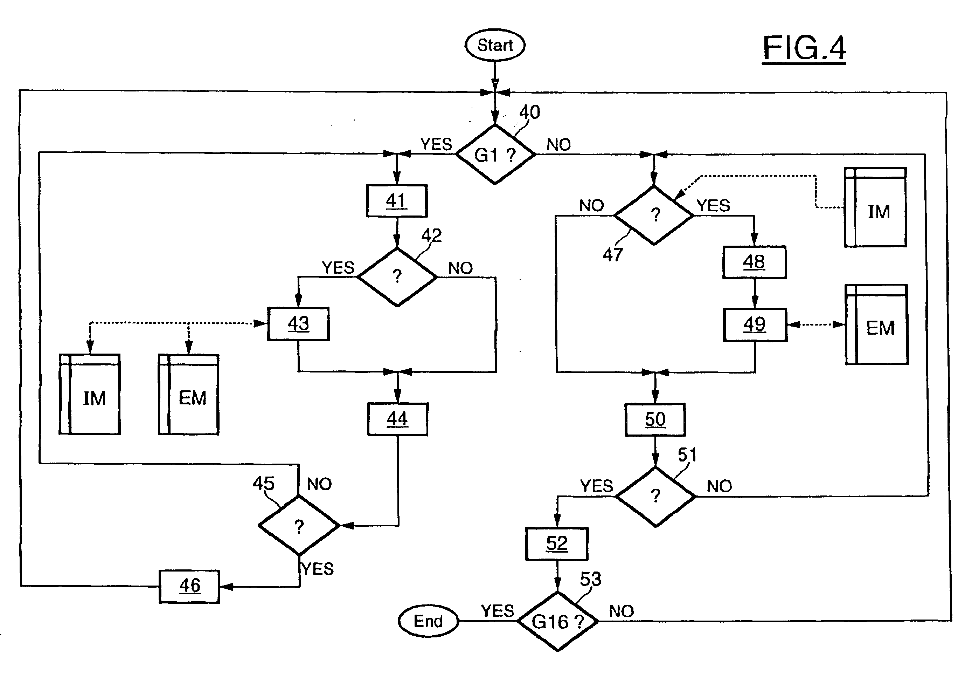

An example of operation of the device according to the invention will be now described with a reference to figure 4 in particular.

In the flow chart illustrated on figure 4, two main states can be clearly distinguished. A first one (steps 41-46) corresponding to a selection state and a second one (steps 47-53) corresponding to the accumulation state.

Briefly speaking, in the selection state, all the 5120 correlation values of the first group G1 at the output of the correlation means are evaluated and the N1 highest energy values are selected and stored in the energy memory EM.

In the accumulate state, only those energies corresponding to the indexes selected in the first group are calculated and accumulated.

More precisely, if the group of correlation values is the first group G1 (step 40) the energy values are calculated for each correlation value (step 41).

If the current energy value is higher than the lowest stored value (step 42) the new energy is stored in the energy memory and the corresponding index is stored in the index memory IM whereas the lowest energy value is canceled from the energy memory (step 43).

Then, a sample counter counting until N (N = 5120) is increased (step 44).

Of course, if in step 42, the answer is "NO", the following step is directly step 44.

As long as the sample counter has not reached its final counting value (step 45) the steps 41 trough 44 are executed.

If in step 45 the sample counter has reached its final counting value, a group or slot counter is increased and the sample counter is reset (step 46).

When the selection has been executed, the control means CTL checks whether or not the current index of the sample of the following group G2 belongs to the indexes stored in the index memory IM (step 47). This check is performed by comparison means realized by specific hardware blocks and/or software running within a microprocessor.

If no, the sample counter is increased (step 50).

If yes, the correlation means CMF and the calculation means CLCM are activated by the control means (step 48) and the energy value corresponding to the current index is accumulated with the energy value corresponding to the same index and stored in the energy memory (step 49).

Steps 47-50 are repeated as long as the sample counter has not reached its final value (step 51) when the sample counter has reached its final counting value, the group counter is increased and the sample counter is reset (step 52).

When G groups (for example G = 15) have been processed, the accumulation process is ended (step 53).

At this stage, the energy memory contains N1 accumulated energy values, from which the detection means will extract one or more maxima.

**Claims**

1. Method for slot synchronisation of a user equipment to a cell in a cell search procedure of a mobile communication system, **characterized by** the fact it comprises

   - a step of receiving a synchronisation signal (SCH) containing a synchronisation code (Cp),
   - a correlation step for performing a correlation process of the received signal with a copy of the synchronisation code stored (LM) in the user equipment for successively delivering groups of at the most N indexed samples respectively affected with N correlation values,
   - a selection step (SEL) for selecting among said N samples of the first group a sub-group of N1 indexed samples according to a predetermined selection criteria,
   - an accumulation step (AD,EM) for accumulating over G groups, energy values corresponding to the correlation values of the N1 selected indexed samples in order to obtain N1 accumulated energy values,
   - a step of acquiring the slot timing by detecting (DM) one or more maxima among the N1 accumulated energy values.

2. Method according to claim 1, **characterized by** the fact that the selection step comprises

   - calculating the energy values of the N samples of the first group (G1), and
   - selecting the N1 indexed samples having the N1 highest energy values.

3. Method according to claim 1 or 2, **characterized by** the fact that N1 is chosen such that $0{,}0125.N < N1 < 0{,}05.N$ .

4. Device for slot synchronisation of a user equipment to a cell in a cell search procedure of a mobile communication system, **characterized by** the fact it comprises

   - reception means (BE) for receiving a synchronisation signal containing a synchronisation code,
   - a local memory (LM) containing a copy of the synchronisation code
   - correlation means (CMF) for performing a correlation process of the received signal with said copy of the synchronisation code for successively delivering groups of at the most N indexed samples respectively affected with N correlation values,
   - selection means (SEL) for selecting among said N samples of the first group a sub-group of N1 indexed samples according to a predetermined selection criteria,
   - accumulation means (AD) for accumulating over G groups, energy values corresponding to the correlation values of the N1 selected indexed samples in order to obtain N1 accumulated energy values,
   - detection means (DM) for acquiring the slot timing by detecting one or more maxima among the N1 accumulated energy values.

5. Device according to claim 4, **characterized by** the fact that the selection means comprises calculation means (CLCM) for calculating the energy values of the N samples of the first group, and by the fact that the selection criteria is a ranking criteria based on the highest energy values.

6. Device according to claim 4 or 5, **characterized by** the fact that N1 is chosen such that $0{,}0125.N < N1 < 0.05.N$ .

7. Device according to any one of claims 4 to 6, **characterized by** the fact that the selection means comprises an energy memory (EM) for storing the N1 energy values of the selected N1 samples, and an index memory (IM) for storing the indexes of the selected N1 samples, and by the fact that the accumulation means comprises comparison means for comparing the current index of a sample of a group with the indexes stored in the index memory, and adding means for accumulating in said energy memory, over said G group, the energy values of the selected N1 samples.

8. Device according to claim 7, **characterized by** the fact that it further comprises control means (CTL) for enabling or disabling the calculation means and the correlation means depending on the result of the comparison made by the comparison means.

9. User equipment of a mobile communication system, **characterized by** the fact that it comprises a slot synchronisation device according to any one of claims 4 to 8.

10. User equipment according to claim 9, **characterized by** the fact it is a cellular mobile phone.

FIG.1

# FIG.2

Primary CCPCH

Slot #0          Slot #1          Slot #14

Data      Data      Data

Primary SCH    $ac_p$     $ac_p$     $ac_p$

Secondary SCH    $ac_s^{1,0}$     $ac_s^{1,1}$     $ac_s^{1,14}$

256 chips

2560 chips

One 10ms SCH radio frame

EP 1 306 979 A1

FIG.3

FIG.4

EP 1 306 979 A1

## EP 1 306 979 A1

**European Patent Office**

## EUROPEAN SEARCH REPORT

**Application Number**

EP 01 12 5320

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 942 543 A (NIPPON ELECTRIC CO) 15 September 1999 (1999-09-15) | 1,2 | H04B1/707 H04B7/26 |
| Y | * abstract * | 4,5,7,9,10 | |
| | * column 6, line 40 - column 8, line 48 * * column 9, line 50 - column 11, line 38 * * figures 8,10 * * claims * | | |
| Y | DE 100 04 874 A (INFINEON TECHNOLOGIES AG) 30 August 2001 (2001-08-30) * abstract * | 4,5,7,9,10 | |
| A | EP 1 134 916 A (NIPPON ELECTRIC CO) 19 September 2001 (2001-09-19) * the whole document * | 1-10 | |
| A | EP 0 887 946 A (NIPPON ELECTRIC CO) 30 December 1998 (1998-12-30) * the whole document * | 1-10 | |

**TECHNICAL FIELDS SEARCHED (Int.Cl.7)**

H04B

The present search report has been drawn up for all claims

| Place of search | Date of completion of the search | Examiner |
|---|---|---|
| THE HAGUE | 15 February 2002 | Dejonghe, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

12

## ANNEX TO THE EUROPEAN SEARCH REPORT
## ON EUROPEAN PATENT APPLICATION NO.

EP 01 12 5320

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2002

| Patent document cited in search report | | Publication date | Patent family member(s) | | Publication date |
|---|---|---|---|---|---|
| EP 0942543 | A | 15-09-1999 | JP | 2894342 B2 | 24-05-1999 |
| | | | JP | 11261446 A | 24-09-1999 |
| | | | CN | 1233118 A | 27-10-1999 |
| | | | EP | 0942543 A2 | 15-09-1999 |
| DE 10004874 | A | 30-08-2001 | DE | 10004874 A1 | 30-08-2001 |
| | | | WO | 0158040 A2 | 09-08-2001 |
| EP 1134916 | A | 19-09-2001 | GB | 2360426 A | 19-09-2001 |
| | | | CN | 1313685 A | 19-09-2001 |
| | | | EP | 1134916 A2 | 19-09-2001 |
| | | | JP | 2001298783 A | 26-10-2001 |
| | | | US | 2001030995 A1 | 18-10-2001 |
| EP 0887946 | A | 30-12-1998 | JP | 2856249 B2 | 10-02-1999 |
| | | | JP | 11017648 A | 22-01-1999 |
| | | | BR | 9802582 A | 05-12-2000 |
| | | | CN | 1215267 A | 28-04-1999 |
| | | | EP | 0887946 A2 | 30-12-1998 |
| | | | US | 6345045 B1 | 05-02-2002 |

EPO FORM P0459

For more details about this annex : see Official Journal of the European Patent Office, No. 12/82